# EUROPEAN PATENT APPLICATION

(11) **EP 3 835 330 A1**
(43) Date of publication of application: **16.06.2021**
(21) Application number: 19306647.9
(22) Date of filing: 13.12.2019
(51) Int. Cl.: C08F 220/18, C09J 143/04, C08F 2/24

(54) **AQUEOUS DISPERSION OF POLYMER PARTICLES AND USES THEREOF AS AN ADHESIVE COMPOSITION**

(71) Applicant: ARKEMA FRANCE, 92700 Colombes (FR)
(72) Inventor: HAIMING, Chen, Changshu City, Jiangsu 215522 (CN); WEI, Liang, Changshu City, Jiangsu 215522 (CN); TAO, Xiaohe, Changshu City, Jiangsu 215522 (CN); SHAN, Zhou, Changshu City, Jiangsu 215522 (CN)
(74) Representative: Arkema Patent

(57) **Abstract**

The present invention relates to an aqueous dispersion of polymer particles and its preparation process, to an adhesive composition comprising the aqueous dispersion and to the use of the adhesive composition for adhering tiles.

## Description

### FIELD OF THE INVENTION

The present invention relates to an aqueous dispersion of polymer particles and its preparation process, to an adhesive composition comprising said aqueous dispersion and to the use of the adhesive composition for adhering tiles.

### TECHNICAL BACKGROUND

The present invention relates to an aqueous dispersion which is particularly suited to be used as a one-component tile adhesive. Such uses include, for example, installing tiles on any type of surface, including smooth surfaces. The adhesive compositions of the invention may, in particular, be applied to the back surface of tiles prior to the bonding of the tiles to a cement or mortar.

The tile adhesive of the invention can effectively reduce the surface tension of the tile surface, and effectively improve the bonding strength between the back surface of the tile and the cement. It is very effective to reduce the potential risk of empty tiles falling off. The tile adhesive of the present invention is an aqueous dispersion having excellent balance between high bonding strength and good loop tack at room temperature. The bonding strength is preserved after immersion in water, aging treatment and freeze-thaw treatment. Furthermore, the aqueous dispersion exhibits a relatively fast surface drying speed and takes only a few minutes to turn transparent after it is coated on the tile.

### SUMMARY OF THE INVENTION

A first object of the present invention is an aqueous dispersion of polymer particles obtained from a monomeric composition comprising:
a) 70 to 90%, in particular 75 to 85%, more particularly 78 to 82%, of butyl acrylate;
b) 5 to 25%, in particular 10 to 20%, more particularly 13 to 17%, of a non-ionic styrenic monomer;
c) 0.5 to 5%, in particular 0.8 to 4%, more particularly 1 to 3%, of (meth)acrylamide;
d) 0.1 to 1.5%, in particular 0.2 to 0.8%, more particularly 0.25 to 0.5%, of an ethylenically unsaturated monomer comprising an acidic group and salts thereof;
e) 0.1 to 1%, in particular 0.4 to 0.8%, more particularly 0.5 to 0.7%, by weight of an ethylenically unsaturated monomer comprising a silane group;
f) optionally, a monomer different from a), b), c), d) and e) as defined above,
wherein the % are % by weight based on the total weight of monomers a) + b) + c) + d) + e) + f).

Another object of the present invention is a process for the preparation of an aqueous dispersion of polymer particles by emulsion polymerization of the monomeric composition according to the invention.

Yet another object of the present invention is an adhesive composition comprising the aqueous dispersion according to the invention or as obtained with the process according to the invention. Another object of the present invention is the use of the adhesive composition according to the invention for adhering tiles.

### DETAILED DESCRIPTION

### Definitions

As used herein, the term "(meth)acrylate" means methacrylate or acrylate. In one embodiment, the (meth)acrylate is an acrylate. In another embodiment the (meth)acrylate is a methacrylate.

As used herein, the term "aqueous dispersion" means a polyphasic system having a dispersed organic phase and a continuous aqueous phase.

As used herein, the term "substantially free of organic solvents" means less than 2%, preferably less than 1%, more preferable 0% by weight of organic solvent based on the weight of the aqueous phase.

As used herein, the term "substantially free of non-ionic surfactant" means less than 2%, preferably less than 1%, more preferable 0% by weight of non-ionic surfactant based on the weight of the aqueous dispersion.

As used herein, the term "non-ionic" refers to a monomer that does not bear an ionic charge at a pH of 1 to 14.

As used herein, the term "aliphatic" refers to a monomer that does not comprise an aromatic group. Aliphatic monomers may be saturated or unsaturated, linear or branched, cyclic or acyclic.

As used herein the term "ethylenically unsaturated" means a monomer that comprises a polymerizable carbon-carbon double bond. A polymerizable carbon-carbon double bond is a carbon-carbon double bond that can react with another carbon-carbon double bond in a polymerization reaction. A polymerizable carbon-carbon double bond is generally comprised in an acryloyl (-C(=O)-CH=CH₂), methacryloyl (-C(=O)-C(CH₃)=CH₂) or vinyl (-CH=CH₂) group. The carbon-carbon double bonds of a phenyl ring are not considered as polymerizable carbon-carbon double bonds.

As used herein the term "monoethylenically unsaturated" means a monomer that comprises only one polymerizable carbon-carbon double bond. A conjugated diene is considered as a monoethylenically unsaturated as there is only one of the carbon-carbon double bonds that participates in the polymerization reaction.

As used herein, the term "soft monomer" means a monomer that forms a homopolymer with Tg of 0°C or lower, in particular -20°C or lower.

As used herein, the term "hard monomer" means a monomer that forms a homopolymer with a Tg of 30°C or higher, in particular 50°C or higher.

As used herein, the term "styrenic" refers to a monomer that contains a carbon-carbon double bond in alpha position to an aromatic ring. Examples of aromatic rings include optionally substituted rings selected from benzene, biphenyl, indene, naphthalene, anthracene and mixtures thereof.

As used herein the term "acidic group" means a group that can be anionised through loss of a proton. For example, a carboxylic acid functional group may form a carboxylate anion under basic conditions.

As used herein the term "phosphorus-based acid monomers" means a monomer comprising an acidic group that comprises a phosphorus atom.

As used herein the term "sulfur-based acid monomers" means a monomer comprising an acidic group that comprises a sulfur atom.

As used herein, the term "silane group" means a group comprising a carbon-silicon bond (C-Si). The silane group may further comprise a silicon-oxygen bond (Si-O).

### Aqueous dispersion

The aqueous dispersion of the invention comprises polymer particles dispersed in an aqueous phase.

The aqueous phase is a liquid comprising water. Said liquid may further comprise organic solvents, such as, for example, ethanol. However, the aqueous phase is preferably substantially free of organic solvents.

The organic phase may be a monomer phase, a polymer phase or a mixture thereof. Said organic phase may further comprise other liquid, solid or semi-solid components, such as surfactants, plasticizers, chain transfer agents and buffering agents. A dispersion having a liquid organic phase may be referred to as an emulsion. A dispersion having a solid or semi-solid organic phase may be referred to as a colloidal suspension. In the field of polymers, such colloidal suspensions are also inaccurately referred to as emulsions, and the process for preparing them is called emulsion polymerization. Another term commonly used for characterizing an aqueous dispersion of polymer particles is "latex".

In one embodiment, the solids content of the aqueous dispersion is in the range of 10 to 70% by weight, in particular 30 to 60% by weight.

In one embodiment, the polymer particles may exhibit a volume average particle size of 50 to 500 nm, in particular 60 to 200 nm. The volume average particle size may be determined by dynamic light scattering or laser diffraction.

In one embodiment, the polymer particles may exhibit a glass transition temperature (Tg) of -40 to -5°C, in particular -35 to -15°C, more particularly -30 to -20°C. The Tg may be determined by DSC according to the method described herein.

In one embodiment, the polymer particles have a gel content of 50 to 90%, in particular 55 to 85%, more particularly 60 to 80%.

The polymer particles of the present invention are based on a combination of specific monomers. Accordingly, the polymer particles are obtained from a monomeric composition comprising at least five different monomers a), b), c), d) and e) as defined below. In other words, the polymer particles comprise polymerized units derived from monomers a), b), c), d) and e). The monomeric composition may further optionally comprise a monomer f) different from monomers a), b), c), d) and e).

The monomeric composition comprises monomer a). Monomer a) is butyl acrylate.

The monomeric composition comprises 70 to 90%, in particular 75 to 85%, more particularly 78 to 82%, by weight of monomer a) based on the total weight of monomers a) + b) + c) + d) + e) + f).

The monomeric composition comprises monomer b). Monomer b) is a non-ionic styrenic monomer. Monomer b) may be a mixture of non-ionic styrenic monomers. Without wishing to be bound by theory, it is believed that the hydrophobicity and high Tg of monomer b) imparts water resistance and cohesion to the resulting polymer particles.

In one embodiment, monomer b) may be selected from styrene, alpha-methylstyrene, tert-butylstyrene, ortho-, meta-, and para-methylstyrene, ortho-, meta- and para-ethylstyrene, o-methyl-p-isopropylstyrene, p-chlorostyrene, p-bromostyrene, o,p-dichlorostyrene, o,p-dibromostyrene, ortho-, meta- and para-methoxystyrene, optionally substituted indenes, optionally substituted vinylnaphthalenes, acenaphthylene, diphenylethylene, vinyl anthracene and mixtures thereof. In particular, monomer b) is styrene.

The monomeric composition comprises 5 to 25%, in particular 10 to 20%, more particularly 13 to 17%, by weight of monomer b) based on the total weight of monomers a) + b) + c) + d) + e) + f).

The monomeric composition comprises monomer c). Monomer c) is (meth)acrylamide. Without wishing to be bound by theory, it is believed that the mixture of a soft monomer, such as monomer a) (butyl acrylate) and a hard monomer, such as monomer c) ((meth)acrylamide) leads to an adhesive having improved mechanical strength. The amount of hard and soft monomer may be adjusted so that the resulting polymer particles exhibit a suitable Tg, i.e. -40 to -5°C, in particular -35 to -15°C, more particularly -30 to -20°C.

In one embodiment, monomer c) is acrylamide.

The monomeric composition comprises 0.5 to 5%, in particular 0.8 to 4%, more particularly 1 to 3%, by weight of monomer c) based on the total weight of monomers a) + b) + c) + d + e) + f).

The monomeric composition comprises monomer d). Monomer d) is an ethylenically unsaturated monomer comprising an acidic group and salts thereof. Monomer d) may be a mixture of ethylenically unsaturated monomers comprising an acidic group and salts thereof. Without wishing to be bound by theory, the neutralization of the acidic groups results in an increase of viscosity of the aqueous dispersion and thus facilitates the application of the adhesive on tiles.

In one embodiment, monomer d) may be selected from C3-C10 mono- or dicarboxylic acid monomers, phosphorous-based acid monomers, sulfur-based acid monomers, salts thereof and mixture thereof.

In particular, monomer d) comprises an acidic group selected from a carboxylic acid (-COOH) group, a carboxylate (-COO⁻) group, a phosphonic acid (-P(=O)(OH)₂) group, a phosphonate (-P(=O)(OR)₂) group, a sulfonic acid (-S(=O)₂OH) group, a sulfonate (-S(=O)₂OR) group, a phosphate (-O-P(=O)(OR)₂) group , wherein each R is independently a counterion, a hydrogen atom, or an optionally substituted hydrocarbyl.

Monomer d) may comprise 2 to 30 carbon atoms and a group selected from acryloyl (-C(=O)-CH=CH₂), methacryloyl (-C(=O)-C(CH₃)=CH₂) and vinyl (-CH=CH₂).

In particular, monomer d) may be selected from (meth)acrylic acid, 2-chloroacrylic acid, vinyl phosphonic acid, vinyl sulfonic acid, p-styrene carboxylic acid, p-styrene sulfonic acid, itaconic acid, maleic acid, maleic anhydride, tetrahydrophthalic acid, tetrahydrophthalic anhydride, fumaric acid, crotonic acid, 3-butenoic acid, mesaconic acid, citraconic acid, 2-carboxyethyl acrylate, sodium 2-acrylamido-2-methyl propane sulfonate, sodium vinyl sulfonate, sodium (meth)allyl sulfonate, sodium 1-allyloxy-2-hydroxypropane sulfonate, a phosphate ester of alkyl (meth)acrylate, a phosphate ester of alkyl (meth)acrylamide, a phosphate ester of alkyl crotonate, a phosphate ester of alkyl maleate, a phosphate ester of alkyl fumarate, a phosphate diester of alkyl (meth)acrylate, a phosphate diester of alkyl crotonate, vinyl phosphate, (meth)allyl phosphate, a phosphate ester of polypropylene glycol mono(meth)acrylate, a phosphate ester of polyethylene glycol mono(meth)acrylate, a phosphate ester of polyoxyethylene allyl ether and mixtures thereof.

More particularly, monomer d) is acrylic acid.

The monomeric composition comprises 0.1 to 1.5%, in particular 0.2 to 0.8%, more particularly 0.25 to 0.5%, by weight of monomer d) based on the total weight of monomers a) + b) + c) + d) + e) + f).

The monomeric composition comprises monomer e). Monomer e) is an ethylenically unsaturated monomer comprising a silane group. Monomer e) may be a mixture of ethylenically unsaturated monomers comprising a silane group.

In particular, monomer e) may comprise an alkoxysilane group. More particularly, monomer e) may comprise an alkoxysilane group having the following formula: 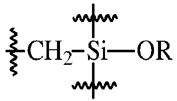 where R is an alkyl, in particular R is an alkyl comprising 1-6 carbon atoms, more particularly R is methyl or ethyl.

In one embodiment, monomer e) may be a monoethylenically unsaturated monomer comprising a dialkoxysilane or a trialkoxysilane group. More particularly, monomer e) may comprise an dialkoxysilane group having the following formula: 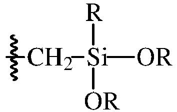 or a trialkoxylsilane group having the following formula: 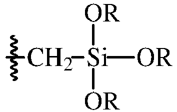 wherein each R is independently an alkyl, in particular an alkyl comprising 1-6 carbon atoms, more particularly methyl or ethyl.

Without wishing to be bound by theory, it is believed that monomer e) may improve the mechanical strength, water-resistance and adhesion of the polymer by establishing crosslinks between the polymer chains. Further, monomer e) may improve the adhesion of the polymer to the tiles and to the surface on which the tiles are adhered, in particular bricks and/or cement. Indeed, the alkoxysilane groups can be hydrolyzed to form silanol (Si-OH) groups, which can in turn establish hydrogen bonds with free hydroxy groups on the tiles and on the surface on which the tiles are adhered. Further, since monomer e) comprises an ethylenic unsaturation it may be copolymerized with monomers a), b), c) and d) and incorporated in the backbone of the polymer particles. Monomer e) is thus different from an external crosslinking agent, i.e. a crosslinking agent that reacts with a polymer after said polymer has been synthesized. The incorporation of a silane-containing monomer in the backbone of the polymer may advantageously protect the silane group from hydrolysis and hence improve the water-resistance of the polymer compared to the use of an external silane crosslinking agent.

Monomer e) may comprise 2 to 30 carbon atoms and a group selected from methacryloyl (-C(=O)-C(CH₃)=CH₂) and vinyl (-CH=CH₂).

In particular, monomer e) may be selected from 3-methacryloxypropyl tri(alkoxy)silane, methacryloxymethyl tri(alkoxy)silane, 3-methacryloxypropylmethyl di(alkoxy)silane, vinylalkyl di(alkoxy)silane, vinyl tri(alkoxy)silane and mixtures thereof.

More particularly, monomer e) may selected from vinyl trimethoxysilane, vinyl diimethoxymethylsilane, vinyl triethoxysilane, vinyl tripropoxysilane, vinyl triisopropoxysilane, vinyl tris(methoxyethoxy)silane, vinyl tributoxysilane, vinyl triacetoxysilane, 3-methacryloxypropyl trimethoxysilane, 3-methacryloxypropylmethyl dimethoxysilane, methacryloxymethyl trimethoxysilane, 3-methacryloxypropyl tris(2-methoxyethoxy) silane, vinyl trichlorosilane, vinyl methyldichlorosilane, vinyltris(2-methoxyethoxy)silane and mixtures thereof.

Even more particularly, monomer e) may be 3-methacryloxypropyl trimethoxysilane.

The monomeric composition comprises 0.1 to 1%, in particular 0.4 to 0.8%, more particularly 0.5 to 0.7%, by weight of monomer e) based on the total weight of monomers a) + b) + c) + d) + e) + f).

The monomeric composition may comprise a monomer f). Monomer f) is different from monomers a), b), c), d) and e) as defined above. Monomer f) may be a copolymerizable monomer, in particular a monomer that is capable of copolymerizing with monomers a), b), c), d) and e).

In one embodiment, monomer f) is an aliphatic ethylenically unsaturated monomer. Monomer f) may be a mixture of aliphatic monoethylenically unsaturated monomers.

Monomer f) may comprise 2 to 30 carbon atoms and a group selected from acryloyl (-C(=O)-CH=CH₂), methacryloyl (-C(=O)-C(CH₃)=CH₂) and vinyl (-CH=CH₂).

In one embodiment, monomer f) may be selected from an alkyl (meth)acrylate, a hydroxyalkyl (meth)acrylate, an optionally substituted (meth)acrylamide, (meth)acrylonitrile, a conjugated diene, an alpha-olefin, a vinyl ester, a vinyl ether, a vinyl halide, and mixtures thereof.

In particular, monomer f) may be selected from alkyl (meth)acrylates such as methyl acrylate, ethyl acrylate, methyl methacrylate, butyl methacrylate, tert-butyl methacrylate and 2-ethylhexyl acrylate; hydroxyalkyl (meth)acrylates such as 2-hydroxyethyl acrylate and 2-hydroxyethyl methacrylate; (meth)acrylonitriles such as acrylonitrile and methacrylonitrile; conjugated dienes such as butadiene, isoprene and pentadiene; alpha-olefins such as ethylene, propene, 1-butene, isobutylene, diisobutylene, 1-nonene and 1-decene; vinyl esters such as vinyl acetate, vinyl propionate, vinyl hexanoate, vinyl 2-ethylhexanoate, vinyl octanoate, vinyl pelargonate, vinyl caproate, neo esters of vinyl alcohol, vinyl laurate and vinyl versatate; vinyl ethers such as methyl-, ethyl-, butyl- and iso-butyl vinyl ether; vinyl halides such as vinyl chloride; and mixtures thereof.

The monomeric composition may comprise 0 to 10%, in particular 0.1 to 5%, more particularly 1 to 3% by weight of monomer f) based on the total weight of monomers a) + b) + c) + d) + e) + f).

The type and amount of monomers a), b), c), d) e) and f) may be adjusted so that the resulting polymer particles exhibit a Tg of -40 to -5°C, in particular -35 to -15°C, more particularly -30 to -20°C.

The monomeric composition may further comprise additional components selected from a chain transfer agent, an initiator, a crosslinker, a surfactant, a buffer and mixtures thereof. Preferably, the monomeric composition may further comprise a chain transfer agent, an initiator and a surfactant.

In one embodiment, the monomeric composition comprises a chain transfer agent. The chain transfer agent may be a compound able to react with a growing polymer chain to form a "dead" polymer with the concurrent formation of a new center for polymer growth. Chain transfer agents are also referred to as molecular weight modifiers. Suitable chain transfer agents are well known in the art and include, for example, thiols such as n-dodecyl mercaptan, tert-dodecyl mercaptan, iso-octyl 3-mercaptopropionate, iso-octyl mercaptoacetate and 2-ethylhexyl thioglycolate; halocarbons such as carbon tetrachloride and carbon tetrabromide. In one embodiment, the monomeric composition comprises a chain transfer agent comprising a thiol group, more particularly a chain transfer agent selected from n-dodecyl mercaptan, tert-dodecyl mercaptan, iso-octyl 3-mercaptopropionate, iso-octyl mercaptoacetate or 2-ethylhexyl thioglycolate. Even more particularly, the chain transfer agent may be iso-octyl 3-mercaptopropionate.

The monomeric composition may comprise 0 to 0.5%, in particular 0.001 to 0.4%, more particularly 0.05 to 0.2%, by weight of chain transfer agent based on the total weight of monomers a) + b) + c) + d) + e) + f).

In one embodiment, the monomeric composition comprises an initiator. The initiator may be a watersoluble free radical initiator. Suitable initiators are well known in the art and include, for example, peroxygen compounds, especially inorganic persulfate compounds such as ammonium persulfate, potassium persulfate and sodium persulfate; peroxides such as hydrogen peroxide; organic hydroperoxides such as cumene hydroperoxide, t-butyl hydroperoxide, acetyl peroxide, benzoyl peroxide, lauroyl peroxide; peracetic acid and perbenzoic acid; redox initiators wherein a water soluble reducing agent such as a ferrous compound promotes the decomposition of peroxides, persulfates and the like; as well as other free radical producing materials such as 2,2'-azobisisobutyronitrile, 4,4'-azobis(4-cyanovaleric acid), and the like. In one embodiment, the monomeric composition comprises an initiator selected from selected from a peroxide or an inorganic persulfate, in particular an initiator selected from ammonium persulfate, potassium persulfate, sodium persulfate and mixtures thereof. More particularly, the initiator may be sodium persulfate.

The monomeric composition may comprise 0 to 2%, in particular 0.1 to 1.5%, more particularly 0.2 to 0.6% by weight of initiator based on the total weight of monomers a) + b) + c) + d) + e) + f).

In one embodiment, the monomeric composition comprises a crosslinker. The crosslinker may be a multifunctional compound capable of reacting with ethylenically unsaturated monomers. In one embodiment, the monomeric composition comprises a crosslinker bearing at least two polymerizable carbon-carbon double bonds; more particularly a multifunctional (meth)acrylate, a polyvinylic monomer or a compound comprising both a (meth)acrylic group and a vinyl group, even more particularly a crosslinker selected from allyl (meth)acrylate, diallyl (meth)acrylate, vinyl acrylate, divinyl benzene, ethylene glycol dimethacrylate, diallyl phthalate, hexanediol diacrylate, trimethylolpropane triacrylate, pentaerythritol triallyl ether, dicyclopentenyl oxyethyl methacrylate, glycerol triacrylate and mixtures thereof.

The monomeric composition may comprise 0 to 2%, in particular 0 to 1%, more particularly 0 to 0.5% by weight of crosslinker based on the total weight of monomers a) + b) + c) + d) + e) + f).

In one embodiment, the monomeric composition comprises a surfactant. The surfactant may be a compound having both a hydrophilic and a hydrophobic part that is able to form micelles of monomer. In one embodiment, the monomeric composition comprises a surfactant selected from an anionic surfactant, a non-ionic surfactant and mixtures thereof; more particularly C6-C20 alkyl sulfate or sulfonate, an optionally substituted diphenyl oxide disulfonate, C6-C20 alkyl ether sulfate or sulfonate, an optionally ethoxylated sulfosuccinate monoester or diester, C6-C20 alkyl phosphate or phosphonate, C6-C20 alkyl ether phosphate or phosphonate, C6-C20 alkyl benzenesulfonate, C4-C18 half esters or diesters of sulfosuccinate, diphenyl oxide disulfonate, ethoxylated fatty alcohol (C10-C40 with an ethoxy unit number ranging from 2 to 100), ethoxy-propoxy copolymer (EO-PO copolymer) and mixtures thereof. Even more particularly, the surfactant is a mixture of anionic surfactants, advantageously the surfactant is a mixture of an optionally substituted diphenyl oxide disulfonate and an optionally ethoxylated sulfosuccinate monoester or diester.

In a particularly preferred embodiment, the monomeric composition is substantially free of non-ionic surfactant.

Examples of suitable C6-C20 alkyl sulfates and alkyl ether sulfates are sodium, potassium or ammonium salts, in particular sodium salt, of decyl sulfate, lauryl sulfate (like Disponil® SLS), stearyl sulfate, fatty alcohol ether sulfate with 30 EO (like Disponil® FES77), fatty alcohol ether sulfate with 2 EO sodium (like Disponil® FES 27), C12/14 fatty alcohol ether sulfate with 12EO (like Disponil® FES 993) and fatty alcohol ether sulfate with 4 EO (like Disponil® FES 32). Examples of suitable C6-C20 alkyl sulfonates and alkyl ether sulfonates are sodium, potassium or ammonium salts, in particular sodium salt, of decyl sulfonate, lauryl sulfonate and stearyl sulfonate. An example of a suitable C6-C20 alkyl benzenesulfonate is sodium dodecylbenzene sulfonate (like POLYSTEP® A-16-22 or Rhodacal® DS-4). An example of a suitable diphenyl oxide disulfonate is sodium dodecyl diphenyl oxide disulfonate (like Dowfax® 2A1). Examples of suitable ethoxylated fatty alcohols include ethoxylated mono-, di-, and trialkylphenols with EO degree from 3 to 50 and alkyl in C1 to C12, ethoxylated fatty alcohols with EO degree from 3 to 80, fatty alcohol ethoxylate, with 30EO, C13-oxo alcohol ethoxylate with 40EO (like Emulan® TO 4070), C13-oxo alcohol ethoxylate with 20EO (like Emulan® TO 2080), ceto stearyl (C16-C18) alcohol ethoxylates (like Empilan® KM80). Examples of suitable sulfosuccinate monoesters or diesters are optionally ethoxylated C6-C20 alkyl monoesters or diesters of sulfosuccinic acid (like Aerosol® A-102).

The monomeric composition may comprise 0 to 2%, in particular 0.1 to 1.5%, more particularly 0.4 to 1%, by weight of surfactant based on the total weight of monomers a) + b) + c) + d) + e) + f).

In one embodiment, the monomeric composition comprises a buffer. The buffer may be a compound that controls and maintains the pH during the polymerization step in a controlled range, for example from 4 to 11, in particular 5 to 10. In particular, the buffer may be selected from ammonia, sodium bicarbonate, sodium carbonate, 2-amino-2-methyl-1-propanol and sodium hydroxide.

The monomeric composition may comprise 0 to 0.5%, in particular 0.01 to 0.25%, by weight of buffer based on the total weight of monomers a) + b) + c) + d) + e) + f).

In a particularly preferred embodiment, the monomeric composition comprises:
- 70 to 90%, in particular 75 to 85%, more particularly 78 to 82%, of monomer a);
- 5 to 25%, in particular 10 to 20%, more particularly 13 to 17%, of monomer b);
- 0.5 to 5%, in particular 0.8 to 4%, more particularly 1 to 3%, of monomer c);
- 0.1 to 1.5%, in particular 0.2 to 0.8%, more particularly 0.25 to 0.5%, of monomer d);
- 0.1 to 1%, in particular 0.4 to 0.8%, more particularly 0.5 to 0.7%, of monomer e);
- 0 to 10%, in particular 0.1 to 5%, more particularly 1 to 3% by weight of monomer f);
- 0 to 0.5%, in particular 0.001 to 0.4%, more particularly 0.05 to 0.2%, of chain transfer agent;
- 0 to 2%, in particular 0.1 to 1.5%, more particularly 0.2 to 0.6%, of initiator;
- 0 to 2%, in particular 0.1 to 1.5%, more particularly 0.4 to 1%, of surfactant; and
- water;
wherein the % are % by weight based on the total weight of monomers a) + b) + c) + d) + e) + f).

The aqueous dispersion of the invention may be obtained according to the process described hereinafter.

### Process for the preparation of the aqueous dispersion

The aqueous dispersion of the invention may be obtained by emulsion polymerization of the monomeric composition as defined above.

The aqueous dispersion of the invention may be prepared using any known emulsion polymerization procedure which produces polymer dispersions in aqueous latex form. Such procedures are described in, for example, Encyclopedia of Polymer Science and Engineering, Vol. 8, p. 659 ff (1987).

Emulsion polymerization involves a system comprising water, monomers, surfactants and an initiator. The emulsion polymerization process typically starts by dispersing the monomers (organic phase) in water (aqueous phase) with the aid of surfactants to provide an emulsion. The initiator is usually dissolved in the aqueous phase and provides a source of free radicals that initiate polymerization. The dispersed monomer droplets act as reservoirs supplying monomer to the growing polymer particles by diffusion through the water. The polymer particles are prevented from coalescing with each other by the surfactant. The emulsion polymerization process therefore provides as a product an aqueous dispersion of polymer particles.

In one embodiment, the emulsion polymerization may be conducted using the following conditions. A pre-emulsion comprising monomers a), b), c), d), e) and f) and a surfactant in water may be prepared. A solution of initiator in water may be separately prepared. The pre-emulsion and solution of initiator may be continuously fed in a reactor over a time of 2 to 6 hours. The temperature of the reactor may be maintained in the range 50 to 95°C.

A step of post-polymerization may be conducted. The post-polymerization step may be performed to polymerize residual monomers. The post-polymerization step may involve the addition of a suitable red/ox system. A suitable oxidizer for the red/ox system may be tert-butyl hydroperoxide or hydrogen peroxide. A suitable reducer for the red/ox system may be ascorbic acid, sodium metabisulfite, ferrous sulfate heptahydrate, sodium ascorbate, sodium bisulfite or Bruggolite® FF6M (mixture of 2-hydroxy-2-sulfinatoacetic acid disodium salt and 2-hydroxy-2-sulfonatoacetic acid disodium salt, with or without sodium sulfite). Typically, the oxidizer employed in the red/ox system is present in an amount of 0 to 3%, in particular 0.01 to 1%, more particularly 0.05 to 0.5%, by weight based on total weight of monomers. The reducer is typically used at levels of from about 0 to about 3%, in particular 0.01 to 0.5%, more particularly 0.025% to 0.25%, by weight based on total weight of monomers.

### Adhesive composition

The adhesive composition of the invention comprises the aqueous dispersion according to the invention as described above or the aqueous dispersion obtained with the process of the invention as described above. The adhesive composition of the invention thus comprises water and polymer particles as described herein.

The adhesive composition of the invention may, in particular be a one-component tile adhesive composition.

The adhesive composition may comprise 30 to 70%, in particular 40 to 60%, more particularly 45 to 55%, by weight of water based on the weight of the adhesive composition.

The adhesive composition may comprise 30 to 70%, in particular 40 to 60%, more particularly 45 to 55%, by weight of polymer particles based on the weight of the adhesive composition.

The adhesive composition may further comprise a thickener. Examples of suitable thickeners are polysaccharides, such as starch and starch derivatives, cellulose and cellulose derivatives such as cellulose ethers and alkyl derivatives of cellulose. In particular, the thickener may be methyl cellulose, sodium carboxy methyl cellulose, hydroxymethyl methyl cellulose, hydroxyethyl methyl cellulose, hydroxypropyl methyl cellulose and hydroxybutyl methyl cellulose.

The amount of thickener may be from 0 to 2%, in particular 0.1 to 1.5%, more particularly 0.5 to 1%, by weight based on the weight of the adhesive composition.

The adhesive composition may further comprise a base. The base may be used as a neutralizing agent. The base may be selected from ammonia water or an aqueous solution of sodium hydroxide. The introduction of a base in the adhesive composition may neutralize the acidic groups of the polymerized units derived from monomer d) and lead to an increase of viscosity of the adhesive composition.

The adhesive composition may further comprise an additive, such as a biocide, a defoaming agent, a wetting agent and mixtures thereof.

### Use of the adhesive composition

The adhesive composition of the invention may be used for adhering tiles.

In particular, the tiles may be adhered on any type of surface. For example, the tiles may be adhered on concrete, masonry, brick, drywall (gypsum board), plaster, stone, asbestos, cement board, plywood, wood surfaces and flakeboard. Advantageously, the tiles may be adhered on smooth surfaces which are base materials difficult to apply ceramic tiles thereon with conventional adhesives.

The adhesive composition may be used in indoor and outdoor applications.

The adhesive composition may be used on horizontal or vertical surfaces.

The adhesive composition may be used in humid environments such as bathrooms.

In one embodiment, the adhesive composition is coated on the back surface of a tile and left to dry before the tile is bonded to another surface.

The tiles adhered with the adhesive composition of the invention exhibit excellent water resistance, aging resistance, resistance to freeze-thaw treatments and bonding strength. Advantageously, the adhesive composition has a fast drying/setting time.

The invention is further described in the following examples.

### EXAMPLES

### Materials and methods

In the examples, the following compounds were used:
BA: butyl acrylate available from Arkema(China) Co., Ltd
Sty: styrene available from Aisikai industry (Shanghai) Co., Ltd
AM: acrylamide as a 50 wt% aqueous solution available from Caledon laboratory chemicals
AA: acrylic acid available from Arkema(China) Co.,Ltd
Silquest® A-174: 3-methacryloxypropyl trimethoxysilane available from Momentive
IOMP: iso-octyl 3-mercaptomercapto propionate available from Evans Chemetics Company
Dowfax® 2A1: disodium dodecyl diphenyl oxide disulfonate available from Dow
Aerosol® A-102: disodium ethoxylated alcohol (C10-C12) half ester of sulfosuccinic acid available from Solvay
Emulan® TO 4070: C13 oxo alcohol ethoxylate available from BASF
Na₂S₂O₈: sodium persulfate as a 5.4 wt% aqueous solution
TBHP: tert-butyl hydroperoxide as a 10 wt% aqueous solution
NaHSO₃: sodium bisulfite as a 9 wt% aqueous solution
NH₃: ammonia as a 25 wt% aqueous solution
Drewplus® 4201: non-ionic defoamer formulation comprising silica derivatives, mineral oils and esters available from Ashland Specialty Ingredients
Kathon® LX 1400: microbiocide aqueous formulation comprising 5-chloro-2-methyl-4-isothiazolin-3-one and 2-methyl-4-isothiazolin-3-one available from Rohm & Haas

The following methods were used:

### Bonding strength

The bonding strength and the bonding strength after water treatment were measured according to JC/T 468-2015. The aqueous dispersion was uniformly coated on the back of standard test tiles (50 X 50 mm). The C1 grade tile mortar was coated to the back of a cement substrate. After drying for 30 min, the test tiles were bonded to the C1 grade tile mortar. After 7 days of curing at 25°C, 40-60% RH, the bonding strength was measured. Some samples were immersed in water for 7days, before measuring the bonding strength.

### Loop tack

Loop tack was measured according FINAT Test Method no.9-'Loop Tack' measurement. The aqueous dispersion was uniformly coated on the test strips. The strips were 25 mm wide and had a minimum length of 175 mm in the machine direction. At least five strips were taken from each sample. The samples were dried under standard environment (23°C ± 2°C and 50% RH ± 5% RH).

### Time to transparency

At standard test environment (25°C, 40-60% RH), the latex aqueous dispersion was uniformly coated on a glass surface. The time the aqueous dispersion changed from white to transparent was determined visually.

### Example 1: Preparation of an aqueous dispersion according to the invention

An aqueous dispersion comprising the following constituents was prepared:

| **Part** | **Constituent** | **Ex 1** | **Ex 2** | **Ex 3** | **Ex 4** | **Comp 1** |
|---|---|---|---|---|---|---|
| **A** | demineralized water | 496 | 496 | 496 | 496 | 498 |
| | Dowfax 2A1 | 1.72 | 1.72 | 1.72 | 1.72 | 1.72 |
| **B** | water | 314.9 | 316.10 | 314.52 | 316.10 | 316.31 |
| | Dowfax® 2A1 | 17.4 | 17.35 | 17.38 | 17.35 | 17.93 |
| | Aerosol® A-102 | 16.3 | 16.82 | 16.23 | 16.82 | 9.20 |
| | Emulan® TO 4070 | - | - | - | 7.42 | - |
| | BA | 1060 | 937.40 | 1058.73 | 937.40 | 1064.76 |
| | Sty | 202 | 329.36 | 201.66 | 329.36 | 202.81 |
| | AM | 52.2 | 52.39 | 59.90 | 52.39 | 44.61 |
| | AA | 4.01 | 5.17 | 1.31 | 5.17 | 13.11 |
| | Silquest® A-174 | 7.83 | 5.17 | 7.82 | 5.17 | 5.17 |
| | IOMP | 1.83 | 1.32 | 1.83 | 1.32 | - |
| **C** | Na₂S₂O₈ | 131 | 131 | 131 | 131 | 131 |
| **D** | TBHP | 27.3 | 27.3 | 27.3 | 27.3 | 27.3 |
| | NaHSO₃ | 32.77 | 32.77 | 32.77 | 32.77 | 32.77 |
| **E** | NH₃ | 0.72 | 0.72 | 0.72 | 0.72 | 0.72 |
| | Drewplus® 4201 | 2.86 | 2.86 | 2.86 | 2.86 | 2.86 |
| | Kathon® LX 1400 | 2.01 | 2.01 | 2.01 | 2.01 | 2.01 |

The aqueous dispersion was prepared with the following process:
Part A was introduced in a three-liter, jacketed glass reactor equipped with stirrer (dual impeller type), a thermocouple, a reflux condenser, and stainless steel or PTFE feed lines. The reactor was then heated to 84°C. Parts B, C, D and E were prepared in advance (see Table below).

When the required temperature was reached and stable, 5.3 wt % of Part B was added to the reactor in 5 minutes. Subsequently, 7.6 wt % of Part C was added to the reactor in 5 minutes. After the resulting exotherm, the remainder of Part B and C were added simultaneously over 4 hours. The temperature was maintained at 84°C for 30 minutes. Then Part C was added to the reactor in 1 hour. The resulting mixture was cooled to room temperature. Then Part D was added to the reactor, followed by Part E.

### Example 2: Applicative properties and performances

The performances of the aqueous dispersions of Example 1 are detailed in the table below:

| Samples | Ex 1 | Ex 2 | Ex 3 | Ex 4 | CEx 1 |
|---|---|---|---|---|---|
| Bonding strength (MPa) | 1.04 | 0.79 | 1.07 | 0.92 | 0.60 |
| Bonding strength after water treatment (MPa) | 0.75 | 0.69 | 0.68 | 0.68 | 0.53 |
| Loop tack (SS N/25mm) | 7.72 | 4 | 6.57 | 7 | 3.4 |
| Time to transparency (minutes) | 5 | 6 | 7 | 11 | 6.5 |

The adhesive compositions of the invention exhibit excellent bonding strength, even after 7 days of immersion in water, loop tack and time to transparency. They have a higher bonding strength than CEx 1 that does not comprise any chain transfer agent. The addition of a non-ionic surfactant in Ex 4 leads to an increase of time to transparency compared to that of Ex 1-3.

## Claims

1. An aqueous dispersion of polymer particles obtained from a monomeric composition comprising:
a) 70 to 90%, in particular 75 to 85%, more particularly 78 to 82%, of butyl acrylate;
b) 5 to 25%, in particular 10 to 20%, more particularly 13 to 17%, of a non-ionic styrenic monomer;
c) 0.5 to 5%, in particular 0.8 to 4%, more particularly 1 to 3%, of (meth)acrylamide;
d) 0.1 to 1.5%, in particular 0.2 to 0.8%, more particularly 0.25 to 0.5%, of an ethylenically unsaturated monomer comprising an acidic group and salts thereof;
e) 0.1 to 1%, in particular 0.4 to 0.8%, more particularly 0.5 to 0.7%, of an ethylenically unsaturated monomer comprising a silane group;
f) optionally, a monomer different from a), b), c), d) and e) as defined above,
wherein the % are % by weight based on the total weight of monomers a) + b) + c) + d) + e) + f).

2. The aqueous dispersion according to claim 1, wherein monomer b) is selected from styrene, alpha-methylstyrene, tert-butylstyrene, ortho-, meta- and para-methylstyrene, ortho-, meta- and para-ethylstyrene, o-methyl-p-isopropylstyrene, p-chlorostyrene, p-bromostyrene, o,p-dichlorostyrene, o,p-dibromostyrene, ortho-, meta- and para-methoxystyrene, optionally substituted indenes, optionally substituted vinylnaphthalenes, acenaphthylene, diphenylethylene, vinyl anthracene and mixtures thereof; in particular monomer b) is selected from styrene.

3. The aqueous dispersion according to claim 1 or 2, wherein monomer c) is acrylamide.

4. The aqueous dispersion according to any one of claims 1 to 3, wherein monomer d) comprises a carboxylic acid (-COOH) group, a carboxylate (-COO⁻) group, a phosphonic acid (-P(=O)(OH)₂) group, a phosphonate (-P(=O)(OR)₂) group, a sulfonic acid (-S(=O)₂OH) group, a sulfonate (-S(=O)₂OR) group, a phosphate (-O-P(=O)(OR)₂) group, wherein each R is independently a counterion, a hydrogen atom, or an optionally substituted hydrocarbyl; in particular monomer d) is selected from (meth)acrylic acid, 2-chloroacrylic acid, vinyl phosphonic acid, vinyl sulfonic acid, p-styrene carboxylic acid, p-styrene sulfonic acid, itaconic acid, maleic acid, maleic anhydride, fumaric acid, crotonic acid, 3-butenoic acid, mesaconic acid, citraconic acid, 2-carboxyethyl acrylate, sodium 2-acrylamido-2-methyl propane sulfonate, sodium vinyl sulfonate, sodium (meth)allyl sulfonate, sodium 1-allyloxy-2-hydroxypropane sulfonate, a phosphate ester of alkyl (meth)acrylate, a phosphate ester of alkyl (meth)acrylamide, a phosphate ester of alkyl crotonate, a phosphate ester of alkyl maleate, a phosphate ester of alkyl fumarate, a phosphate diester of alkyl (meth)acrylate, a phosphate diester of alkyl crotonate, vinyl phosphate, (meth)allyl phosphate, a phosphate ester of polypropylene glycol mono(meth)acrylate, a phosphate ester of polyethylene glycol mono(meth)acrylate, a phosphate ester of polyoxyethylene allyl ether and mixtures thereof; more particularly monomer d) is acrylic acid.

5. The aqueous dispersion of any of claims 1 to 4, wherein monomer e) is a monoethylenically unsaturated monomer comprising a dialkoxysilane or a trialkoxysilane group; in particular monomer e) is selected from 3-methacryloxypropyl tri(alkoxy)silane, methacryloxymethyl tri(alkoxy)silane, 3-methacryloxypropylmethyl di(alkoxy)silane, vinylalkyl di(alkoxy)silane, vinyl tri(alkoxy)silane and mixtures thereof; more particularly monomer e) is selected from vinyl trimethoxysilane, vinyl diimethoxymethylsilane, vinyl triethoxysilane, vinyl tripropoxysilane, vinyl triisopropoxysilane, vinyl tris(methoxyethoxy)silane, vinyl tributoxysilane, vinyl triacetoxysilane, 3-methacryloxypropyl trimethoxysilane, 3-methacryloxypropylmethyl dimethoxysilane, methacryloxymethyl trimethoxysilane, 3-methacryloxypropyl tris(2-methoxyethoxy) silane, vinyl trichlorosilane, vinyl methyldichlorosilane, vinyltris(2-methoxyethoxy)silane and mixtures thereof; even more particularly monomer e) is 3-methacryloxypropyl trimethoxysilane.

6. The aqueous dispersion according to any one of claims 1 to 5, wherein the monomeric composition further comprises a chain transfer agent, in particular a chain transfer agent comprising a thiol group, more particularly a chain transfer agent selected from n-dodecyl mercaptan, tert-dodecyl mercaptan, isooctyl 3-mercaptopropionate or 2-ethylhexyl thioglycolate.

7. The aqueous dispersion of claim 6, wherein the monomeric composition comprises 0 to 0.5%, in particular 0.001 to 0.4%, more particularly 0.05 to 0.2%, by weight of chain transfer agent based on the total weight of monomers a) + b) + c) + d) + e) + f).

8. The aqueous dispersion according to any one of claim 1 to 7, wherein the monomeric composition further comprises an initiator, in particular an initiator selected from a peroxide or an inorganic persulfate, more particularly an initiator selected from ammonium persulfate, potassium persulfate, sodium persulfate and mixtures thereof.

9. The aqueous dispersion according to any one of claim 1 to 8, wherein the monomeric composition further comprises a surfactant; in particular a surfactant selected from an anionic surfactant, a non-ionic surfactant and mixtures thereof; more particularly a surfactant selected from C6-C20 alkyl sulfate or sulfonate, an optionally substituted diphenyl oxide disulfonate, C6-C20 alkyl ether sulfate or sulfonate, an optionally ethoxylated sulfosuccinate monoester or diester, C6-C20 alkyl phosphate or phosphonate, C6-C20 alkyl ether phosphate or phosphonate, ethoxylated fatty alcohol (C10-C40 with an ethoxy unit number ranging from 2 to 100), ethoxy-propoxy copolymer (EO-PO copolymer) and mixtures thereof; in particular the surfactant is a mixture of anionic surfactants, more particularly the surfactant is a mixture of an optionally substituted diphenyl oxide disulfonate and an optionally ethoxylated sulfosuccinate monoester or diester.

10. The aqueous dispersion according to any one of claim 1 to 9, wherein the polymer particles have a Tg of -40 to -5°C, in particular -35 to -15°C, more particularly -30 to -20°C.

11. The aqueous dispersion according to any one of claim 1 to 10, wherein the polymer particles have a gel content of 50 to 90%, in particular 55 to 85%, more particularly 60 to 80%.

12. Process for the preparation of an aqueous dispersion of polymer particles by emulsion polymerization of the monomeric composition as defined in any one of claims 1 to 11.

13. An adhesive composition comprising the aqueous dispersion according to anyone of claim 1 to 11 or as obtained according to the process of claim 12.

14. The adhesive composition of claim 13, wherein the composition is a one-component tile adhesive.

15. Use of the adhesive composition of claim 14, for adhering tiles.
